Europäisches Patentamt

European Patent Office

Office européen des brevets

(11) Numéro de publication: **0 232 639**

**A1**

## (12) DEMANDE DE BREVET EUROPEEN

(21) Numéro de dépôt: **86402707.3**

(22) Date de dépôt: **05.12.86**

(51) Int. Cl.⁴: **A01D 90/12 , A01F 12/50**

(30) Priorité: **06.12.85 FR 8518119**

(43) Date de publication de la demande:
**19.08.87 Bulletin 87/34**

(84) Etats contractants désignés:
**AT BE CH DE ES GB GR IT LI LU NL**

(71) Demandeur: **LACAILLE S.A., Société Anonyme dite:**
**Conan**
**F-41290 Oucques(FR)**

(72) Inventeur: **Lacaille, Christian**
**Le Hameau du Val de Cisse**
**F-41330 Fosse(FR)**

(74) Mandataire: **Bonnetat, Christian et al**
**Cabinet PROPI Conseils 23 rue de Léningrad**
**F-75008 Paris(FR)**

(54) **Dispositif de pesage et de chargement de produits.**

(57) La présente invention concerne un dispositif destiné au pesage et au chargement de produits, du type comportant une trémie (3) basculante contenant les produits et montée sur un bâti (1).

Il comporte notamment,
-un châssis intermédiaire (2) disposé entre le bâti - (1) et la trémie (3), le châssis étant constitué de deux parties supérieure (17) et inférieure (16), articulées entre elles autour d'un axe de rotation (19),
-des moyens de blocage (30) disposés entre la trémie (3) et la partie supérieure (17) du châssis intermédiaire,
-des moyens de levage (20) de l'ensemble du châssis (2) et de la trémie (3) disposés entre la partie inférieure (16) du châssis et le bâti,
-des moyens de pesage (40) des produits contenus dans la trémie (3),et
-des moyens de basculement (45) de la trémie (3) disposés entre la partie inférieure (16) et la partie supérieure (17).

Application notamment dans le domaine agricole.

FIG.1

## Dispositif de pesage et de chargement de produits.

Dispositif de pesage et de chargement de produits.

La présente invention concerne les dispositifs destinés au pesage et au chargement de produits, plus particulièrement ceux du type comportant une trémie contenant les produits et montée sur un bâti.

Dans le domaine agricole, il est intéressant de pouvoir d'une part, déterminer avec précision et rapidité la quantité de produits récoltés afin de connaître le rendement de production d'une surface agraire et d'autre part, transférer les produits contenus dans la trémie vers des zones de stockage ou dans des remorques, sans avoir recours à des opérations et manipulations compliquées, dangereuses et coûteuses.

Actuellement, les produits récoltés d'une surface agraire à l'aide de machines agricoles adaptées, sont déposés dans des remorques tractées. Une fois remplies, il est nécessaire de conduire ces remorques vers des installations équipées de matériels de pesage pour déterminer la quantité de produits récoltés. Ces installations sont, de plus, situées à plusieurs kilomètres du lieu de récolte, augmentant ainsi les coûts de production. Ces produits sont ensuite déposés vers les zones de stockage ou chargés dans des remorques tractées de façon à les entreposer dans des endroits souhaités.

La présente invention a pour but un dispositif de pesage et de chargement de produits quelconques contenus dans une trémie permettant de donner directement une lecture précise du pesage des produits et de charger les produits une fois pesés dans un réceptacle extérieur, évitant ainsi les inconvénients précédemment mentionés. L'invention a également pour but une application particulière du dispositif comme remorque à usage agricole apte à coopérer avec un véhicule.

A cet effet, selon l'invention, le dispositif de pesage et de chargement de produits, comportant une trémie basculante contenant les produits et montée sur un bâti est remarquable en ce qu'il comporte :

-un châssis intermédiaire disposé entre ledit bâti et ladite trémie, ledit châssis étant constitué de deux parties, respectivement supérieure et inférieure, articulées entre elles autour d'un axe de rotation sensiblement horizontal,

-des moyens de blocage dsiposés entre ladite trémie et la partie supérieure dudit châssis intermédiaire,

-des moyens de levage de l'ensemble dudit châssis et de ladite trémie disposés entre la partie inférieure dudit châssis et ledit bâti,

-des moyens de pesage desdits produits contenus dans ladite trémie, et

-des moyens de basculement de ladite trémie disposés entre la partie inférieure dudit châssis coopérant avec ledit bâti et la partie supérieure dudit châssis coopérant avec ladite trémie.

Dans une forme préférée de réalisation, les moyens de levage dudit châssis supportant la trémie sont constitués par au moins un vérin disposé entre la partie inférieure dudit châssis et ledit bâti, ledit vérin pouvant occuper deux positions extrêmes définissant une première position haute dudit châssis par rapport audit bâti et une seconde position basse dudit châssis par rapport audit bâti.

Avantageusement, des moyens de guidage de la partie inférieure dudit châssis sont agencés sur ledit bâti permettant de guider le déplacement dudit châssis lors de la mise en action des moyens de levage.

De même, dans une forme préférée de réalisation, les moyens de blocage de la trémie sur la partie supérieure dudit châssis sont constitués par au moins un vérin pouvant occuper deux positions extrêmes définissant une première position de verrouillage de ladite trémie sur la partie supérieure dudit châssis correspondant notamment au levage de la trémie, et une seconde position de déverrouillage de ladite trémie dudit châssis correspondant au pesage de la trémie contenant lesdits produits.

Selon une caractéristique de l'invention, les moyens de pesage de la trémie contenant lesdits produits comportent des capteurs disposés sur ledit bâti et reliés à un afficheur, le pesage étant réalisé d'une part, lorsque le chassis est en position basse par rapport audit bâti, et d'autre part, lorsque la trémie est en position déverrouillée par rapport audit châssis.

Selon une autre caractéristique de l'invention, les moyens de basculement de la trémie contenant lesdits produits sont constitués par au moins un vérin disposé entre la partie inférieure et la partie supérieure dudit châssis, le basculement de la trémie s'effectuant autour de l'axe de rotation d'articulation desdites parties, d'une part, lorsque ledit châssis est en position haute par rapport audit bâti et d'autre part, lorsque la trémie est en position verrouillée sur ledit châssis.

Bien entendu, les applications du dispositif selon l'invention ne se limitent pas à l'usage agricole mais pourraient convenir également dans d'autres domaines techniques.

Les figures du dessin annexé feront bien comprendre comment l'invention peut être réalisée. Sur ces figures, des références identiques désignent des éléments semblables.

-Les figures 1 et 2 représentent respectivement une vue de face et de côté partiellement écorchée du dispositif selon l'invention.

-Les figures 3, 4, 5 et 6 représentent - schématiquement une application préférée du dispositif adaptée à une remorque à usage agricole selon quatre configurations occupées par la remorque, respectivement :
. une première configuration de route
. une seconde configuration de pesage
. une troisième configuration de levage
. une quatrième configuration de basculement

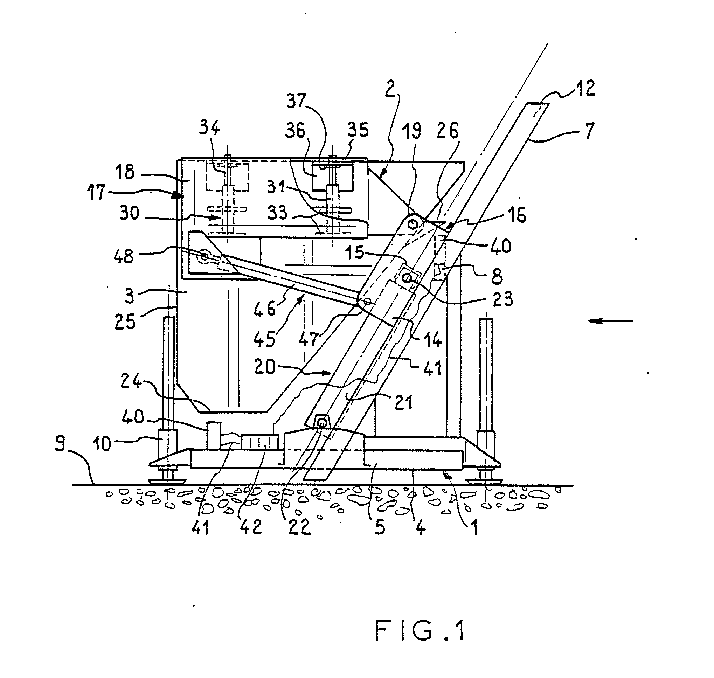

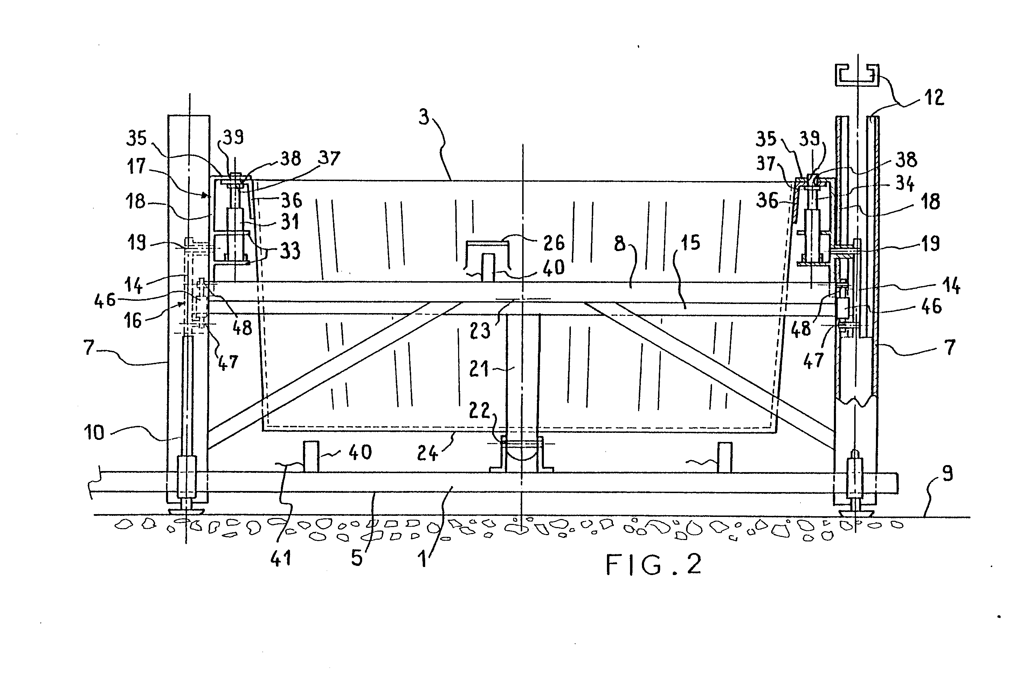

Selon les figures 1 et 2, le dispositif de pesage et de chargement de produits selon l'invention, comporte un bâti 1 sur lequel est agencé un châssis intermédiaire 2 supportant une trémie 3. De façon plus précise, le bâti 1 est constitué d'un assemblage de longerons métalliques 4 reliés entre eux par soudure et vis de fixation.

L'assemblage de longerons définit principalement une base 5 sensiblement de forme rectangulaire sur laquelle sont disposés deux montants latéraux 7 agencés l'un en regard de l'autre sur chaque côté opposé de la base 5. Les montants 7 sont inclinés par rapport au plan horizontal défini par la base et forment sensiblement un angle de 60° par rapport à ce plan. Au moins une traverse 8 parallèle au plan relie les deux montants afin de rigidifier le bâti. La base 5 du bâti 1 repose sur le sol 9 par l'intermédiaire de moyens de stabilisation et de réglage de l'horizontalité tels que par exemple des vérins 10 à vis ou hydrauliques.

Les deux montants 7 ont une section en U - (représentée sur la figure 2), dont les extrémités libres des branches du U sont recourbées vers l' interérieur de manière à définir des glissières 12 faisant office de moyens de guidage. Dans chaque montant 7 est monté un flanc latéral 14, qui coopère avec les glissières 12. Les deux flancs 14 sont reliés entre eux par au moins une traverse 15 parallèle à la traverse 8 du bâti 1.

Ces deux flancs 14 solidaires par la traverse 15 constituent la partie inférieure 16 du châssis intermédiaire 2. Une partie supérieure 17 comporte des joues 18 indépendantes et est articulée sur la partie inférieure 16 autour d'axes de rotation 19. De façon plus précise, chaque joue 18 est articulée sur chaque flanc 14 au moyen d'un axe 19 sensiblement horizontal. Des traverses (non représentées) sont également agencées entre les deux joues.

Des moyens de levage 20 du châssis par rapport au bâti sont constitués par un vérin hydraulique 21 du type télescopique relié d'une part, à la base 5 du bâti 1 par un axe 22 et d'autre part, sur la traverse 15 de la partie inférieure 16 du châssis par un axe 23. Ce vérin 21 peut occuper deux positions extrêmes, une première position haute du châssis et une seconde position basse du châssis par rapport au bâti comme il sera explicité ultérieurement en regard du fonctionnement du dispositif. De plus, le vérin 21 est disposé sensiblement dans un plan médian situé entre les montants et sa ligne d'action est parallèle à ces montants.

Sur la partie supérieure 17 du châssis intermédiaire 2 est positionnée la trémie 3 entre les deux joues 18.

La trémie 3 est réalisée par une pluralité de longerons sur lesquels se fixent un fond 24 et des parois latérales 25, par exemple métalliques. Plus précisément, des moyens de blocage 30, disposés entre la trémie 3 et la partie supérieure 17, permettent le verrouillage ·et le déverrouillage de la trémie par rapport au chassis intermédiaire 2.

Ces moyens de blocage 30 sont constitués par un ensemble de vérins hydrauliques 31 agencés deux à deux sur chaque joue 18. Chaque vérin 31 est maintenu verticalement par deux pattes 33 disposées l'une au-dessous de l'autre et adaptées pour recevoir le corps de chaque vérin. Ces pattes 33 sont solidaires des joues 18 lesquelles comportent une troisième patte 35 située au-dessus et coaxialement aux deux autres et contre lesquelles des cornières 36 solidaires de la trémie viennent en contact·lorsque les vérins de blocage 31 sont actionnés. La partie active 34 de chaque vérin 31 comporte une collerette 37 qui prend appui sur ses cornières 36 en les maintenant plaquées contre les troisièmes pattes 35. Plus précisément, la partie active de chaque vérin 31, située au-delà de la collerette, passe au travers d'orifices 38 et 39 coaxiaux pratiqués respectivement dans chacune des cornières 36 et dans chacune des troisièmes pattes 35 de façon à émerger de celles-ci. La trémie 3 est alors verrouillée dans la partie supérieure du châssis 2 grâce au centrage et au blocage réalisés par la partie active 34 et la collerette 37 de chaque vérin par rapport aux cornières 36.

Des moyens de pesage sont agencés sur le bâti 1 et comportent par exemple trois capteurs à jauges de contraintes 40, les deux premiers étant fixés sur la base 5 et le troisième sur la traverse 8 reliant les deux montants 7. Ces capteurs sont reliés par des liaisons électriques 41 à un afficheur 42 qui délivre ainsi la masse de produits contenus dans la trémie lorsque celle-ci repose par le fond 24 et un appui 26 ménagé sur l'une des parois latérales 25,sur les trois capteurs 40 comme il sera explicité dans le fonctionnement.

Le châssis intermédiaire 2 composé des deux parties inférieure 16 et supérieure 17 articulées entre elles autour des axes 19 comporte des moyens de basculements 45 constitués par au moins un vérin hydraulique 46. De préférence, un vérin 46 est respectivement agencé sur chaque ensemble défini par un flanc 14 et une joue 18 correspondant respectivement à la partie inférieure et à la partie supérieure du châssis 2. Chaque vérin 46 est articulé sur le flanc 14 autour d'un axe 47 et sur la joue 28 autour d'un axe 48, et assure lorsqu'il est actionné, le pivotement de la partie supérieure autour de l'axe de rotation 19.

Les circuits et organes hydrauliques et électriques alimentant les divers vérins n'ont pas été représentés mais ne posent pas de difficultés de réalisation pour un homme de l'art.

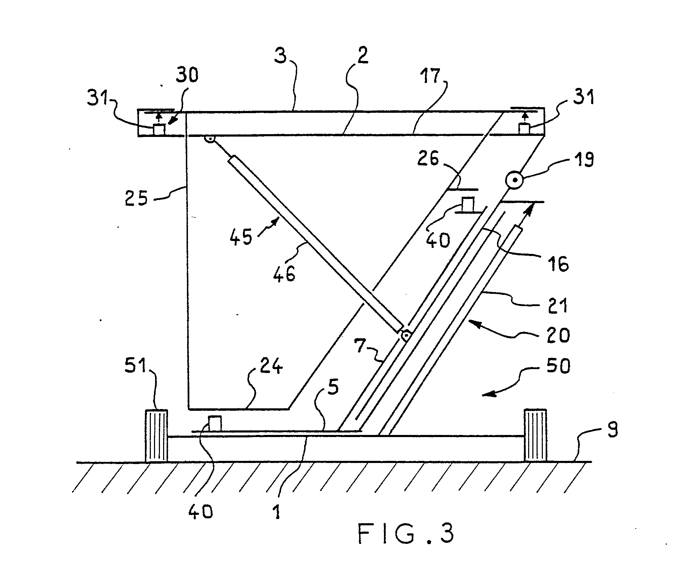

Le fonctionnement du dispositif sera décrit ci-après notamment en regard des figures 3, 4, 5 et 6 qui illustrent schématiquement quatre configurations qui peut occuper le dispositif de pesage et de chargement appliqué à une remorque 50 notamment à usage agricole.

La configuration de route, figure 3, représente la remorque 50 au contact avec le sol 9 au moyen de roues 51, qui coopère à l'aide d'un attelage avec un véhicule de tourisme ou agricole non dessiné sur la figure.

La trémie 3 est verrouillée par les quatre vérins de blocage 31 sur la partie supérieure 17 du châssis intermédiaire 2. Les vérins de levage 21 et de basculement 46 respectivement du châssis 2 par rapport au bâti 1 et de la partie supérieure 17 par rapport à la partie inférieure 16 du châssis intermédiaire 2 sont rentrés. Le châssis 2 est alors en position basse.

Les capteurs 40 agencés sur le bâti 1 ne sont pas sollicités pendant le transport puisque la trémie 3 est verrouillée sur le châssis 2 et ne sont soumis en conséquence à aucun choc susceptible de les détériorer. Dans cette configuration, la trémie 3 peut contenir ou non des produits variés (solides ou liquides) suivant la charge susceptible d'être tractée par le véhicule.

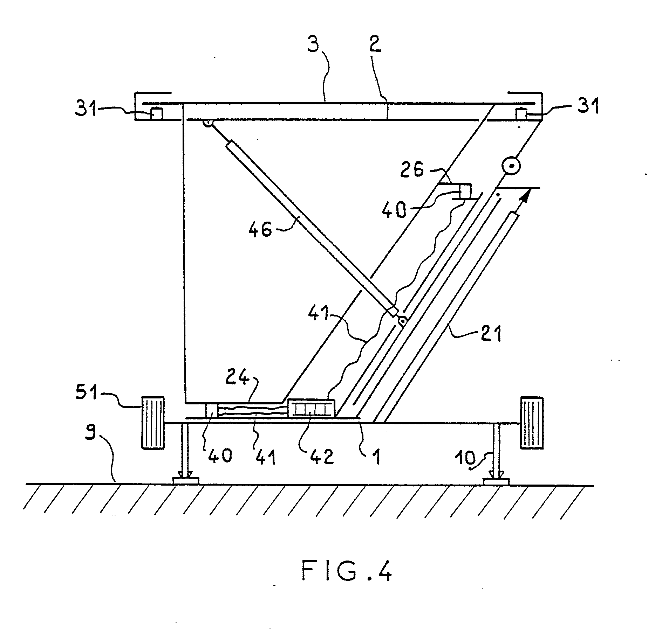

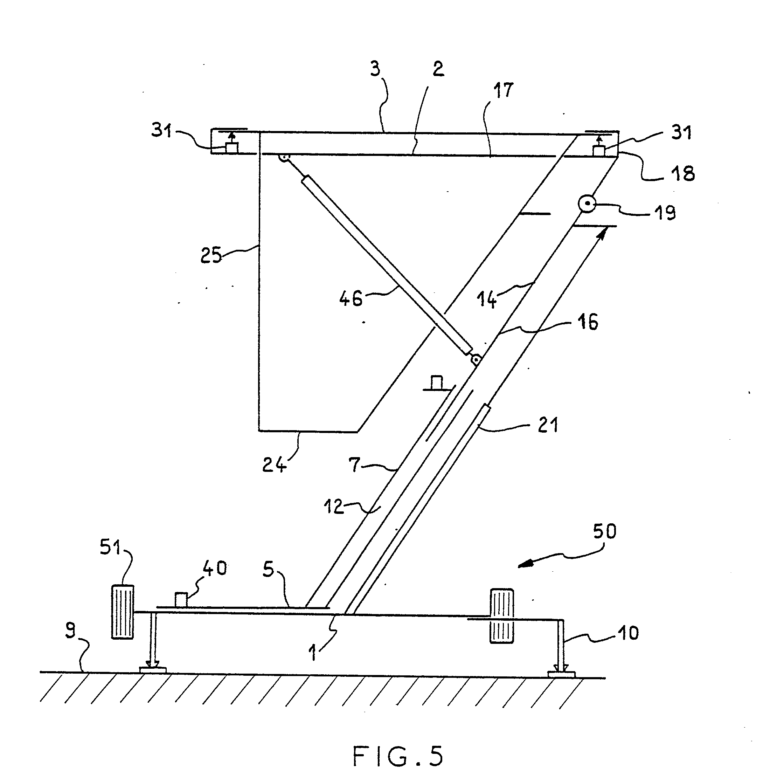

La configuration de pesage, figure 4, représente la remorque 50 à l'arrêt la trémie 3 contenant les produits à peser. Les vérins de stabilisation 10 sont alors actionnés lesquels permettent ainsi de soulever la remorque du sol, d'augmenter la stabilité de la remorque 50 et d'obtenir un plan horizontal correct compensant les variations de relief du sol de façon à optimiser la qualité de la pesée. Les vérins de levage 21 et de basculement 46 ne sont pas actionnés. En revanche, la partie active 34 de chaque vérin de blocage 31 de la trémie 3 par rapport au châssis, est rentrée progressivement permettant de désolidariser la trémie du châssis. La trémie 3 vient alors en contact par le fond 24 et l'appui latéral 26 sur l'agencement des trois capteurs 40 solidaires du bâti. Lorsque le fond et l'appui reposent sur les capteurs, les collerettes 37 des parties actives 34 des vérins 31 ne supportent plus la trémie, les parties actives étant rappelées par des ressorts de traction non représentés. A ce moment là, la trémie est complètement désolidarisée de toute partie annexe et permet une pesée précise, strictement des deux masses, celle de la tare et celle du contenu. Les capteurs 40 transmettent alors des signaux à un afficheur 42 préalablement étalonné,au moyen de liaisons électriques 41, qui délivre l'indication de la masse de produits contenus dans la trémie. Dans cette configuration, la trémie 3 est uniquement en contact avec les capteurs. La configu ration de levage, figure 5, est opérationnelle lorsque les vérins de blocage 31 sont actionnés et verrouillent, au moyen des collerettes, les cornières de la trémie contre les troisièmes pattes de joues de la partie supérieure du châssis, de façon que la trémie 3 et le châssis 2 forment un ensemble unique.

De plus, les moyens de stabilisation 10 comportent une béquille de sécurité qui est sortie du côté où s'effectue le levage afin d'accroître la stabilité de la remorque et éviter ainsi un éventuel renversement de celle-ci lors du levage de la trémie et de son contenu.

L'ensemble préalablement mentionné est soulevé par le vérin hydraulique 21 de type télescopique jusqu'à atteindre la hauteur souhaitée.

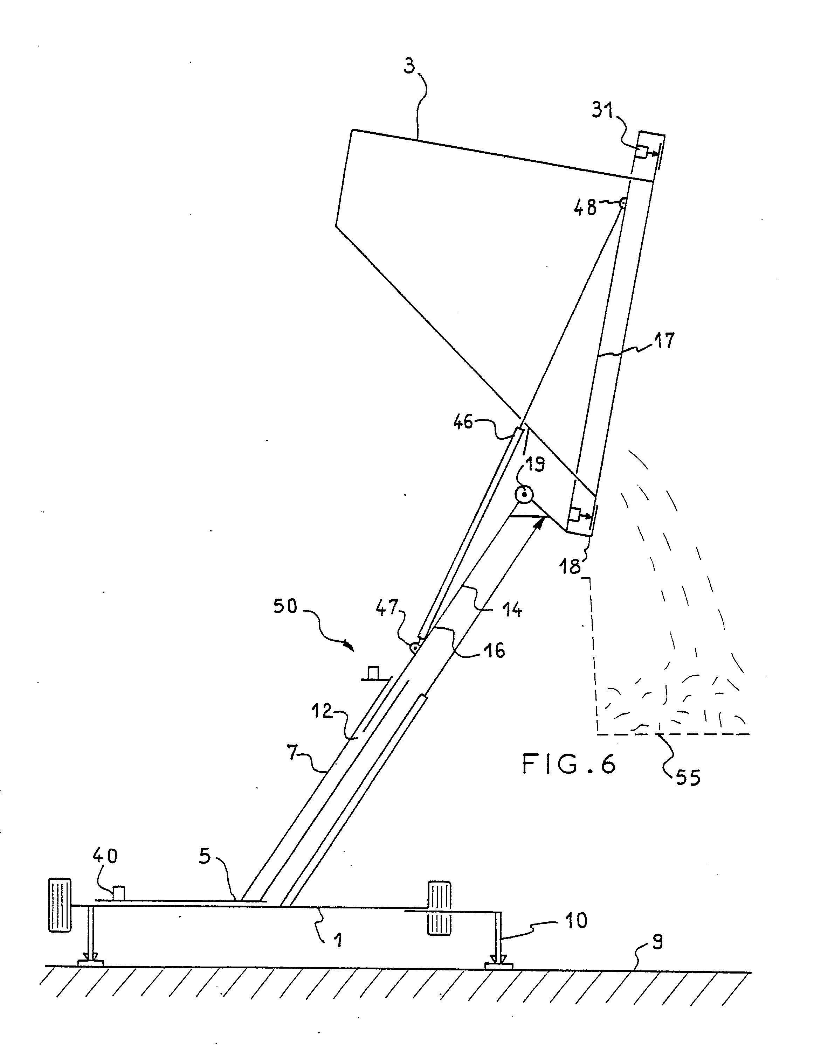

La configuration de basculement, figure 6, est effectuée lorsque le châssis est en position haute et la trémie verrouillée dans le châssis. Le vérin de basculement 46 est actionné provoquant la rotation dans le sens dextrorsum sur la figure de la partie supérieure 17 du châssis par rapport à la partie inférieure autour des axes d'articulation 19. Les produits contenus dans la trémie s'évacuent dans un réceptacle 55 (représenté en traits pointillés) telle qu'une benne de camion.

La forme de la trémie 3 permet une évacuation totale des produits notamment d'ensilage. Une fois l'opération effectuée, le vérin du basculement 46 est rentré, entrainant la rotation dans le sens senestrorsum de la partie haute du châssis et de la trémie jusqu'au retour dans la position initiale du châssis. Le vérin de levage télescopique 21 est à son tour mis en action de façon à permettre la descente du châssis, c'est-à-dire des flancs 14 dans les glissières 12 des montants 7. De même, les moyens de stabilisation 10 sont rentrés.

Le dispositif est revenu dans la position illustrée sur la figure 3.

Les différentes configurations décrites ci-dessus peuvent être effectuées de différentes façons à partir de cycles manuels, semi-automatiques ou automatiques selon les besoins. Dans la mise en action de ses cycles, certaines sécurités doivent être prises, notamment il doit être impossible de peser en marche, de lever et vider les produits sans verrouiller la trémie dans le châssis.

**Revendications**

1. Dispositif destiné au pesage et au chargement de produits, du type comportant une trémie - (3) basculante contenant desdits produits et montée sur un bâti (1), caractérisé en ce qu'il comporte :
-un châssis intermédiaire (2) disposé entre ledit bâti (1) et ladite trémie (3), ledit châssis étant constitué de deux parties, respectivement supérieure (17) et inférieure (16), articulées entre elles autour d'un axe de rotation (19) sensiblement horizontal,
-des moyens de blocage (30) disposés entre ladite trémie (3) et la partie supérieure (17) dudit châssis intermédiaire,
-des moyens de levage (20) de l'ensemble dudit châssis (2) et de ladite trémie (3) disposés entre la partie inférieure (16) dudit châssis et ledit bâti,
-des moyens de pesage (40) desdits produits contenus dans ladite trémie (3), et
-des moyens de basculement (45) de ladite trémie (3) disposés entre la partie inférieure (16) dudit châssis (2) coopérant avec ledit bâti (1) et la partie supérieure (17) dudit châssis (2) coopérant avec ladite trémie (3).

2. Dispositif selon la revendication précédente caractérisé en ce que les moyens de levage dudit châssis (2) supportant la trémie (3) sont constitués par au moins un vérin (21) disposé entre la partie inférieure (16) dudit châssis et ledit bâti, ledit vérin (21) pouvant occuper deux positions extrêmes définissant une première position haute dudit châssis par rapport audit bâti et une seconde position basse dudit châssis par rapport audit bâti.

3. Dispositif selon l'une des revendications 1 et 2 caractérisé en ce que des moyens de guidage - (12) de la partie inférieure (16) dudit châssis (2) sont agencés sur ledit bâti (1) permettant de guider le déplacement dudit châssis lors de la mise en action des moyens de levage.

4. Dispositif selon la revendication 3 caractérisé en ce que lesdits moyens de guidage sont constitués par des glissières (12) dans lesquelles est susceptible de coulisser la partie inférieure (16) dudit châssis (2).

5. Dispositif selon l'une des revendications 1 à 4 caractérisé en ce que lesdits moyens de blocage (30) de ladite trémie sur la partie supérieure (17) dudit châssis sont constitués par au moins un vérin (31) pouvant occuper deux positions extrêmes définissant une première position de verrouillage de ladite trémie (3) sur la partie supérieure (17) dudit châssis (2) correspondant notamment au levage de la trémie, et une seconde position de déverrouillage de ladite trémie (3) dudit châssis - (2) correspondant au pesage de la trémie contenant lesdits produits.

6. Dispositif selon l'une des revendications 1 à 5 caractérisé en ce que lesdits moyens de pesage de la trémie contenant lesdits produits comportent des capteurs (40) disposés sur ledit bâti et reliés à un afficheur (42), le pesage étant réalisé d'une part, lorsque le châssis est en position basse par rapport audit bâti, et d'autre part, lorsque la trémie est en position déverrouillée par rapport audit châssis.

7. Dispositif selon l'une des revendications 1 à 6 caractérisé en ce que les moyens de basculement (45) de ladite trémie (3) contenant lesdits produits sont constitués par au moins un vérin (46) disposé entre la partie inférieure (16) et la partie supérieure (17) dudit châssis, le basculement de la trémie s'effectuant autour de l'axe de rotation d'articulation (19) desdites parties, d'une part, lorsque ledit châssis est en position haute par rapport audit bâti et d'autre part, lorsque la trémie est en position verrouillée sur ledit châssis.

8. Dispositif selon l'une des revendications 1 à 7 caractérisé en ce que la ligne d'action du vérin - (21) du levage est sensiblement parallèle aux moyens de guidage (12) agencés sur ledit bâti.

9. Dispositif selon l'une des revendications précédentes caractérisé en ce que ledit bâti comporte des moyens de stabilisation et de réglage du niveau d'horizontalité (10) pendant les opérations de pesage et de chargement desdits produits.

10. Remorque (50), notamment à usage agricole, comprenant des moyens d'attelage apte à coopérer avec un véhicule caractérisée en ce qu'elle est équipée d'un dispositif destiné au pesage et au chargement de produits selon l'une quelconque des revendications précédentes.

FIG.1

FIG.2

FIG.3

FIG.4

FIG.5

FIG. 6

## DOCUMENTS CONSIDERES COMMÈ PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 194 589  (TEGTMEIER & SONS, INC.)<br>* Pages 2,3; figures 1,2 * | 1 | A 01 D   90/12<br>A 01 F   12/50 |
| A |  | 2-5,8,10 |  |
|  | --- |  |  |
| Y | DE-A-2 658 820  (MASCHINENFABRIK FAHR AG)<br>* Pages 8,9; figures 1,2 * | 1 |  |
|  | --- |  |  |
| A | EP-A-0 141 756  (ETS M. LESGOURGUES)<br>* Page 4, lignes 12-35; pages 5,6; figures 1,2 * | 1,6,10 |  |
|  | --- |  | DOMAINES TECHNIQUES RECHERCHES (Int. Cl.4) |
| A | FR-A-2 390 081  (C. VAN DER LELY N.V.) |  | A 01 D<br>A 01 F<br>B 66 F |
|  | --- |  |  |
| A,P | FR-A-2 581 601  (AUDUREAU SA)<br>* Page 2, paragraphes 5,6; page 3; figures 1,2 * | 1-4,6 |  |
|  | ----- |  |  |

Le présent rapport de recherche a été établi pour toutes les revendications

| Lieu de la recherche | Date d'achèvement de la recherche | Examinateur |
|---|---|---|
| LA HAYE | 12-03-1987 | VERMANDER R.H. |